# EUROPEAN PATENT APPLICATION

(11) **EP 4 503 031 A1**
(43) Date of publication of application: **05.02.2025**
(21) Application number: 24192836.5
(22) Date of filing: 05.08.2024
(51) Int. Cl.: G11B 27/031, G11B 27/28, G10H 1/00

(54) **METHOD AND SYSTEM FOR AI/XI BASED AUTOMATIC ENERGY ADAPTATION FOR DETERMINED SONGS FOR VIDEOS**

(30) Priority: 04.08.2023 US 202363530806 P
(71) Applicant: Bellevue Investments GmbH & Co. KGaA, 10589 Berlin (DE)
(72) Inventor: Rein, Dieter, 10589 Berlin (DE); Jaron, Jürgen, 10589 Berlin (DE)

(57) **Abstract**

There is provided herein a method that involves adapting a user selected song to reflect the estimated energy variation contained in a video work so that the selected song has energy levels that are comparable with those exhibited in the video and can be played as a soundtrack.

## Description

### CROSS REFERENCE TO RELATED APPLICATIONS

This application claims the benefit of pending U.S. Patent Application serial number 63/530,806 filed on August 4, 2023, and issued U.S. Patent No. 12,009,013 B2, issued June 11, 2024, and incorporates said application and patent by reference into this document as if fully set out at this point.

### TECHNICAL FIELD

The instant invention relates generally to processing video works and, more particularly, to methods of adaptively changing the energy level of music items determined as fitting music items to video material after an elaborate analysis of the video material and utilizing AI (artificial intelligence) and XI (expert intelligence) systems.

### BACKGROUND

The audio and video editing and generation process and working space has undergone a rapid evolution over at least the last thirty or forty years and has been marked by developmental innovations that are aimed at helping the end user create music. Early on the user was happy to be able to generate a minute of music that sounded somewhat like a piano. Now the user is able to easily generate music resembling the performance of an entire orchestra if so desired.

The same can be said of video creation and editing. The first video recordings took the form of small analog tapes produced by large portable cameras, whose data had to be transferred in a cumbersome way to a personal computer for subsequent processing. Tape-based video that had been transferred to a computer could be viewed by the user and possibly subjected to some minimal editing of the content. However, the main use for the video after transfer was to provide the user an opportunity to watch the content. The large portable camera of earlier years has been replaced by a large number of readily available devices, e.g., smart phones, digital cameras, dedicated recording camera, etc. However, there has been a steady migration toward the use of smart phones to record video since the device is always at hand and the video can be viewed immediately after it has been acquired and easily shared with others without loading it first onto a desktop computer. Further, smart phones have local storage for a large number of videos and this further encourages the user to freely record activities and events that the user wants to preserve.

One problem associated with automatic selection of audio material from a database for use as a soundtrack with a video production is that the energy of the audio material may not reflect the action in the video. Generally, the songs in a database will be fixed in terms of their musical content and features, e.g., energy level, duration, beats-per-minute, key, etc. So, if the intent is to use a selected song as a soundtrack in a video production the songs in the database will have a fixed energy level. That becomes an issue when it is desired to produce a video work where the musical content is supposed to have musical impact on the listener that compliments the action in the video.

Thus, what is needed is a system and method for adjusting the energy level of a song that has been selected as a possible soundtrack for a video work, where the video work has varying levels of energy throughout.

Heretofore, as is well known in the media editing industry, there has been a need for an invention to address and solve the above-described problems. Accordingly, it should now be recognized, as was recognized by the present inventors, that there exists, and has existed for some time, a very real need for a system and method that would address and solve the above-described problems.

Before proceeding to a description of the present invention, however, it should be noted and remembered that the description of the invention which follows, together with the accompanying drawings, should not be construed as limiting the invention to the examples (or embodiments) shown and described. This is so because those skilled in the art to which the invention pertains will be able to devise other forms of this invention within the ambit of the appended claims.

### SUMMARY OF THE INVENTION

According to a first embodiment, disclosed herein is a method of adapting the energy of a selected music item that matches in some sense the content of a selected video production to the energy variation throughout the video production . The music items in the audio database will have been tagged with emotion tags that describe their energy and emotion, potentially also as the energy and emotion vary over time. That is, each music item could potentially exhibit a number of different, even overlapping, emotions. These time-varying emotion tags or labels (the terms have the same meaning and will be used interchangeably herein) will have been associated with each music item in the database through manual curation by an expert. That is, an expert in audio and video editing will have been tasked with the responsibility of screening the music items in the database. The database will then be used subsequently to train the artificial intelligence to fit songs to a given video work.

Each video for which the user would like to get one or more music item suggestions or music item selections will preferably have been analyzed by existing well known cloud-based AI services to determine scenes and segments in the video. Those of ordinary skill in the art will understand that segment analysis applies to a broad range of techniques that identify elements in the video and assigns those elements and their associated pixels with an object. The Al-identified scenes, segments, and objects are assigned labels pertinent to their identity, e.g., tags that might be used include people, faces, actions (dancing, skiing, hiking, climbing, swimming, diving) or monuments, sights and much more. Some embodiments might use edge-based segmentation, threshold-based segmentation, region-based segmentation, cluster-based segmentation, watershed segmentation, or some combination of the foregoing.

The image-based AI services are utilized to identify a plurality of variables that characterize the video material. In a first preferred step video recognition algorithms are applied to the video material to determine and detect certain objects in the video material - for example the video recognition algorithm could identify objects such as a tree, a cat or a house, etc., in the video work. It should be noted that this list is not an exhaustive list, these examples are to illustrate the different objects that can be detected by the video recognition step of the instant invention.

As a next preferred step, the AI services will determine the cut velocity of the video material. That is, the AI services will determine a parameter variable that represents the frequency of edits in the video. Further the AI services will determine variables that represent the motion of detected objects in the video compared from frame to frame which corresponds to the level of motion in the video content. Additional parameters that could be filled with values are the luminosity of the video material, wherein the level of light vs. the level of dark in the video material will be analyzed and integrated into a parameter value. Additionally, the AI services are utilized to identify colors in the video section.

The instant invention will then utilize the so determined and gathered variables and their values to generate a data spectrum or score chart that reflects the values of the variables over time. The instant invention will generate individual score charts for each parameter, or, in some embodiments, one score chart encompassing all parameters. These score charts are then utilized to build a "concept" for each determined video scene and its associated selected audio material - video scenes preferably being for example sections of video of a length of 5 to 10 seconds.

The generated "concept" is then utilized by the instant invention to modify settings of the selected music item. As an example, the instant invention could modify the energy of the music item by modifications in the instrumentation, the major vs. minor chord progressions and volume levels across the instrument stems. Additionally, the adaptation process will preferably apply volume fades to the beginning and end of the music item.

An approach for automated adaptation of selected music items for video production using AI video analysis methods is disclosed herein. It is clear that such would be a great help for any video producer who is attempting to fit a video work with complementary audio material that is drawn from a large database and furthermore to specifically adapt the audio material on a more granular level to the parameters of the video material.

It should be clear that an approach such as this would be a tremendous aid to the user and would additionally provide assistance in the development and the creation of professional soundtracks for user selected video material. The often-frustrating process of finding and generating music material that is fitting in dynamic and impact to a particular video and its sequences is replaced with an automatic process that provides the user with at least one music item that in emotion and impact match the same in a video. With the instant invention the selected music item will then be further refined to fit the course of emotion, energy and impact throughout the video. Therefore, this approach delivers functionality to the user of music and audio editing software which enables the user to swiftly being provided with a fitting soundtrack for a selected video without the need to individually pick, check and select different music item for different sections of the video

The foregoing has outlined in broad terms some of the more important features of the invention disclosed herein so that the detailed description that follows may be more clearly understood, and so that the contribution of the instant inventors to the art may be better appreciated. The instant invention is not to be limited in its application to the details of the construction and to the arrangements of the components set forth in the following description or illustrated in the drawings. Rather, the invention is capable of other embodiments and of being practiced and carried out in various other ways not specifically enumerated herein. Finally, it should be understood that the phraseology and terminology employed herein are for the purpose of description and should not be regarded as limiting, unless the specification specifically so limits the invention.

### BRIEF DESCRIPTION OF THE DRAWINGS

These and further aspects of the invention are described in detail in the following examples and accompanying drawings.
Fig. **1** is an illustration of a working environment of the instant invention according to an embodiment.
Fig. **2** depicts the workflow of the instant invention when determining the best fitting song.
Fig. **3** illustrates the individual video analysis variants initiated by the AI system.
Fig. **4** depicts the different modification variants initiated to parameters of the selected song.
Fig. **5** illustrates an example score chart generated for a selected video and also the generated concept for the adaptation of the music item.

### DETAILED DESCRIPTION

While this invention is susceptible of embodiment in many different forms, there is shown in the drawings, and will be described hereinafter in detail, some specific embodiments of the instant invention. It should be understood, however, that the present disclosure is to be considered an exemplification of the principles of the invention and is not intended to limit the invention to the specific embodiments or algorithms so described.

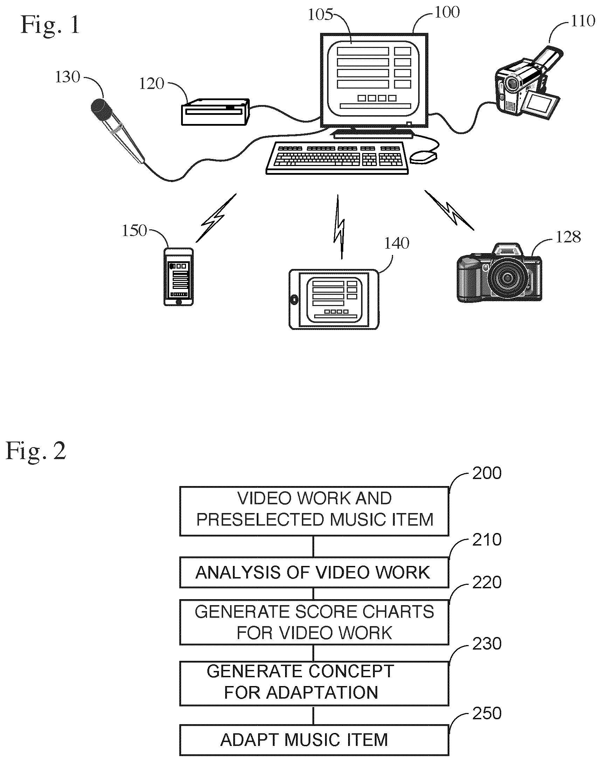

As is generally indicated in Fig. **1****,** at least a portion of the instant invention will be implemented in form of software running on a user's computer **100** or another device with a CPU such a table computer, smart phone, etc. For purposes of the instant disclosure, the word "computer" or CPU will be used generically to refer to any programmable device such as those listed in the previous sentence. Such a computer will have some amount of program memory and storage (whether internal or accessible via a network) as is conventionally utilized by such units. Additionally, it is possible that an external video **110** or digital still (or video) camera **128** of some sort be utilized with - and will preferably be connectible to the computer so that video and/or graphic information can be transferred to and from the computer **100** (Fig. **1****).** Preferably the camera **110 / 128** will be a digital video camera, although that is not a requirement, as it is contemplated that the user might wish to utilize still images from a digital still camera in the creation of his or her multimedia work. Further given the modern trend toward incorporation of cameras into other electronic components (e.g., in handheld computers, telephones, laptops, etc.) those of ordinary skill in the art will recognize that the camera might be integrated into the computer or some other electronic device and, thus, might not be a traditional single-purposes video or still camera. Although the camera will preferably be digital in nature, any sort of camera might be used, provided that the proper interfacing between it and the computer is utilized. Additionally, a microphone **130** might be utilized so that the user can add voice-over narration to a multimedia work and an external storage device **120** such as a CD or DVD burner, an external hard disk, a SSD drive, etc., could prove to be useful for storing in-progress or completed works. Further, it might also be possible, and is shown in Fig. **1****,** that the process of the instant invention might be implemented on portable tablet computer devices **140** or on mobile devices, such as smart phones **150.**

Turning next to Fig. **2****,** this figure illustrates some of the main aspects of a preferred embodiment of the instant invention. A user, whether amateur, semi-pro or professional, provides video material **200** to the instant invention with a goal of adapting a preselected associated music item to the video. Note that music item, as that term is used herein, should be broadly construed to include audio content of any sort and may include short or long music recordings of any type including audio recordings that may or may not be traditional music items with lyrics that are meant to be sung. Automatically adapting an associated music item in terms of feel, of energy, of emotions, etc., to match it to a video work has traditionally not really been quantifiable by any approach. However, with the instant invention this is made possible.

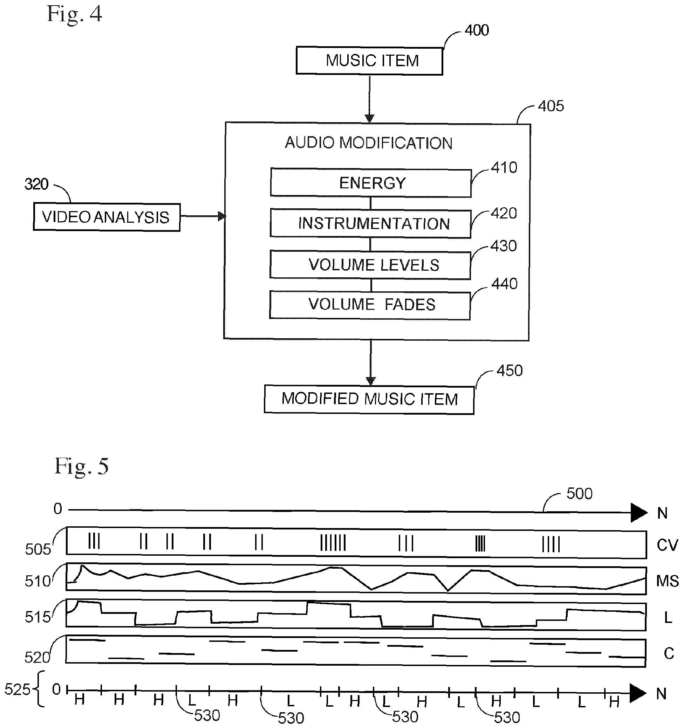

The selected video material **200** is initially analyzed **210** by one or more trained AI services, where parameters of the video material are examined and values for these parameters are provided. Knowledge of the parameters and their associated values enable the instant invention to generate score charts **220** that represents and measures the dynamics of the video, i.e., a numerical representation of the activity progression of the content. An example of a score chart is contained in Fig. **5****,** discussed below. In brief, the instant invention will use the score chart to generate "concepts" **230** both on a macroscopic level for the whole music item and also at a more detailed level, e.g., for each scene separately.

The instant invention will then adapt the user's music item **250** to improve its matching score when compared against the activity in the video. The matching score represents how closely the dynamics and energy of music item match the dynamics and energy of the video. This score is not specifically communicated to the user, however on request the instant invention will provide it.

Generally, the instant invention proceeds through the score chart values of the video and the combined level (obtained from all individual analysis values over the runtime of the video) is selected as the point from which the score is determined. This might be done by comparison of the video material values with the energy levels of the music item at the same sections. It should be noted that the score generation is an approximation. By providing this score to the user, the instant invention also allows the user to re-initiate the energy level adaptation process to raise the matching score.

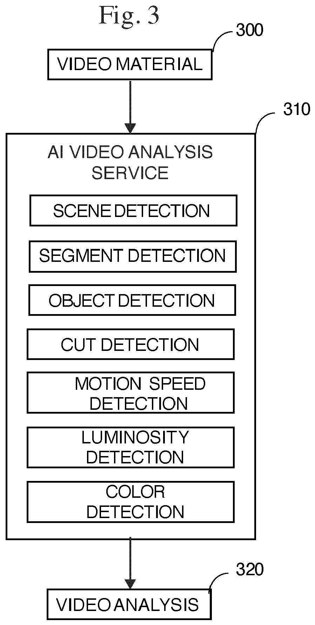

Coming next to Fig. **3****,** this figure illustrates one of the individual video analysis variants initiated by the AI system. The video material **300** is preferably initially subjected to a video content analysis **310,** which is most preferably performed by an AI service. There are a number of such services available that allow a user to upload a video to an online platform and have that video analyzed using an AI content analysis system **310.** These systems are designed determine video characteristics such as scenes, segments and objects, cuts, motion speed, luminosity color, etc. in the video and additionally, and more importantly, provide data values **320** that report the results of the analysis. These numerical values are then associated with the analyzed video material **200.**

Fig. **4** depicts some of the possible audio modification variants that might be applied to the selected music item. The music item parameters **400** are modified **405** to adapt the music item to the energy variations in the video material **320.** The instant invention will adapt the energy in the music item **410,** the instrumentation **420,** the volume levels across instrument stems **430** and also the volume progression **440,** especially at the beginning and end of the music item.

A suitable method of adapting the energy level of a music item is disclosed in USP 11,942,065 from the same inventors and incorporated herein by reference into this document. Adjustments which involve changes in instrumentation **420** are disclosed in US Patent application 18/078,197 from the same inventors, the disclosure of which is also incorporated herein by reference. Modifications of the instrument composition allow the energy level to be increased by addition of instruments to the music item and decreased by removal of instruments. In a preferred arrangement, instruments removal and/or decrease in volume is instituted for low energy video sections by removing at most 3 instruments, where "remove" should be interpreted as actual removal or, more often, "muting" or otherwise making the chosen instruments inaudible. Additionally, the instruments will preferably be removed or muted in the order of vocals, drums, percussion, bass and synth.

The volume level adaptations across the instrument stems **430** and the intensity of the adaptations depend primarily on the calculated score chart. If it is determined that in a section of the video the score chart indicates that section is high energy and dynamic, the volume is increased and the opposite step is taken for sections where low energy is identified. Additionally, volume fades **440** are also potentially applied to the music item primarily at its beginning and end, with the intensity of the fades and the velocity of the fades depending on the energy exhibited by the video material.

Turning next to Fig. **5****,** this figure illustrates a score chart generated for typical video work. Additionally, this figure illustrates how a chosen music item might be adapted to fit that video. The score chart **550** and the concept timeline illustration **525** might be communicated to the user or not. However, its main purpose is to be used internally by the instant invention in adapting the music item.

In some embodiments the score chart displays four different analyses over time of the video work. As noted in this figure, the score chart discloses the run time of the video **500** and plots the results from the video analysis along the same timeline. In Fig. **5****,** the four analyses are cut velocity **505,** motion or speed **510,** luminosity **515** and color analysis **520.** Obviously, these four analyses are just examples of the sorts of analyses that might be performed on the video work. Object detection might also be used, e.g., an automobile that has been identified in a scene might be an indication that the audio should be high energy and that is especially true if the auto and/or its background is moving within the frame. What is important is that the analysis should represent in some way the rapidity with which the content or background of the video images changes over time and/or its static significance (e.g., an individual brandishing a weapon could call for a high energy audio soundtrack). The energy of the audio might also be modified depending on the inherent audio of the video, e.g., when dialog or other video related sounds are present, that may also be a consideration in determining the energy level and volume of the audio. Preferably, these analyses are applied to the video on a frame-by-frame basis and plotted relative to the run-time of the video, i.e., along the same timeline. This allows the instant invention to determine, with a high degree of accuracy, the timing and boundaries of scenes with high or low energy.

This determination will be utilized as one component of the concept timeline illustration **525** for the associated music item. In the concept timeline **525** of Fig. 5, the detected scene boundaries of the video material are denominated with vertical lines **530** and the detected scenes are associated with a specific letter illustrating the determined potential association of the scene of having high or low energy. The letter "H" **535** indicates a scene in the video material potentially of high energy and the letter "L" **540** indicates a scene in the video material potentially of lower energy. As can be seen, the concept line **525** provides information both on a macro level (entire song or multiple scenes) and micro level (individual scene), with the macro view making it possible to develop energy-related trends that continue over several scenes and the micro view making it possible to fine tune the audio energy to fit short duration individual scenes.

The cut velocity **505** graph marks time stamps in the video where a relatively high number of video cuts occur. The frequency of cuts is then used to help determine the energy level of the video material at that point.

The motion algorithm **510** determines the time stamps where objects are seen to exhibit high or low motion in the video.

The corrections to the video based on a luminosity analysis **515** are based on the notion that luminosity in a light scene is related happy/positive and a dark scene is related to angry/negative. Therefore, the darker sections are tagged as potential low energy sections and the lighter sections are tagged as potential high energy sections. Note that although luminosity might be determined for every frame in the video, in many cases a luminosity value might be obtained every 2, 3, etc., frames. In some cases the luminosity for multiple frames might be averaged together. In other cases, the luminosity for a scene or a segment might be obtained. However, one goal is to create a time-varying measure of luminosity values for the video, whether or not the values are based on individual frames is not important.

A color analysis **520** is implemented which in many respects is similar to the luminosity analysis **515.** The color analysis is based on the notion that the intensity of the colors and the colors themselves are associated with the energy content in a video section. So, for example, a video section with darker green might correspond to angry/negative and might potentially be tagged as high energy, whereas light green sections might be tagged as low energy. As was the case with luminosity, the color analysis might be based on individual frames, multiple frames, sections, cuts, etc. But, the color analysis should typically result in a time-varying series of color values that can be related to the timeline of the video work.

Additionally, the chord structure of the audio work could potentially be changed from major to minor key depending on the luminosity value **515** or the principal scene color **520.** That is, as an example low values of luminosity and dark green color sections might cause the chosen audio work to be changed from a major key to a minor key, if it is not in a minor key already. The opposite might be done for high luminosity or sections of the audio that are brighter colors, e.g., light green.

As has been disclosed all these mentioned video analysis algorithms are combined and the results formed into the concept timeline **525** that is utilized to apply changes to the audio material. The score chart might take the general form of the score chart in Fig. **5****.** Although there are many different ways to combine the different energy estimates in the score chart to get an estimate of the energy level to which the audio work should be set, one approach would be to simply compare the suggested energy levels across the different measurements at the same time and chose the energy level that is predominant. For example, if there are three measures pointing toward high energy and two toward low, the assumption could be made that the audio should be adjusted to a high energy level if it is not at that level already. In other embodiments, the cut velocity **505** and/or the motion speed **510** might be given greater weight, with the other measures used when those two are conflicting or do not give a clear signal as to the best energy level. Of course, there may be sections where there is no strong indication either way, in which case a decision might be made to adjust the audio to a medium or middle energy level. Additionally, in some embodiments the adjustments in the energy level of the audio material might be made in the order of precedence energy adaptation, instrumentation adaptation, volume level adaptation and volume fades. Further, these adjustments might be applied singularly or in combination. Those of ordinary skill in the art will be readily able to devise alternative approaches as was previously disclosed in USP 11,942,065 and/or US Patent application 18/078,197 which are incorporated by reference, above.

### CONCLUSIONS

Of course, many modifications and extensions could be made to the instant invention by those of ordinary skill in the art.

It should be noted and understood that the invention is described herein with a certain degree of particularity. However, the invention is not limited to the embodiment(s) set for herein for purposes of exemplifications, but is limited only by the scope of the attached claims.

It is to be understood that the terms "including", "comprising", "consisting" and grammatical variants thereof do not preclude the addition of one or more components, features, steps, or integers or groups thereof and that the terms are to be construed as specifying components, features, steps or integers.

The singular shall include the plural and vice versa unless the context in which the term appears indicates otherwise.

If the specification or claims refer to "an additional" element, that does not preclude there being more than one of the additional elements.

It is to be understood that where the claims or specification refer to "a" or "an" element, such reference is not to be construed that there is only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

For purposes of the instant disclosure, the term "at least" followed by a number is used herein to denote the start of a range beginning with that number (which may be a ranger having an upper limit or no upper limit, depending on the variable being defined). For example, "at least 1" means 1 or more than 1. The term "at most" followed by a number is used herein to denote the end of a range ending with that number (which may be a range having 1 or 0 as its lower limit, or a range having no lower limit, depending upon the variable being defined). For example, "at most 4" means 4 or less than 4, and "at most 40%" means 40% or less than 40%. Terms of approximation (e.g., "about", "substantially", "approximately", etc.) should be interpreted according to their ordinary and customary meanings as used in the associated art unless indicated otherwise. Absent a specific definition and absent ordinary and customary usage in the associated art, such terms should be interpreted to be ± 10% of the base value.

When, in this document, a range is given as "(a first number) to (a second number)" or "(a first number) - (a second number)", this means a range whose lower limit is the first number and whose upper limit is the second number. For example, 25 to 100 should be interpreted to mean a range whose lower limit is 25 and whose upper limit is 100. Additionally, it should be noted that where a range is given, every possible subrange or interval within that range is also specifically intended unless the context indicates to the contrary. For example, if the specification indicates a range of 25 to 100 such range is also intended to include subranges such as 26 -100, 27-100, etc., 25-99, 25-98, etc., as well as any other possible combination of lower and upper values within the stated range, e.g., 33-47, 60-97, 41-45, 28-96, etc. Note that integer range values have been used in this paragraph for purposes of illustration only and decimal and fractional values (e.g., 46.7 - 91.3) should also be understood to be intended as possible subrange endpoints unless specifically excluded.

It should be noted that where reference is made herein to a method comprising two or more defined steps, the defined steps can be carried out in any order or simultaneously (except where context excludes that possibility), and the method can also include one or more other steps which are carried out before any of the defined steps, between two of the defined steps, or after all of the defined steps (except where context excludes that possibility).

Further, it should be noted that terms of approximation (e.g., "about", "substantially", "approximately", etc.) are to be interpreted according to their ordinary and customary meanings as used in the associated art unless indicated otherwise herein. Absent a specific definition within this disclosure, and absent ordinary and customary usage in the associated art, such terms should be interpreted to be plus or minus 10% of the base value.

Thus, the present invention is well adapted to carry out the objects and attain the ends and advantages mentioned above as well as those inherent therein. While the inventive device has been described and illustrated herein by reference to certain preferred embodiments in relation to the drawings attached thereto, various changes and further modifications, apart from those shown or suggested herein, may be made therein by those of ordinary skill in the art, without departing from the spirit of the inventive concept the scope of which is to be determined by the following claims.

## Claims

1. A method of automatically matching an audio work to a video work, wherein said video work is comprised of a plurality of video frames, comprising the steps of:
(a) accessing said video work;
(b) analyzing said video frames to identify one or more video cuts;
(c) analyzing said video frames to identify at least one indicia of motion or speed;
(d) analyzing said video frames to obtain a time-varying luminosity value series;
(e) analyzing said video frames to obtain a time-varying color value series;
(f) using at least said identified video cuts, said identified indicia of motion or speed, said time-varying luminosity value series, and said time-varying color value series to form an adaptation function;
(g) using at least said adaptation function to adapt said audio work to said video work; and
(h) performing at least a part of said video work and said adapted audio work together for the user.

2. A method of automatically matching a song to a video work comprised of a plurality of video frames according to claim 1, wherein step (g) comprises the steps of:
(g1) analyzing said video frames to identifying at least one object in said video work, and
(g2) using at least said identified video cuts, said identified indicia of motion or speed, said time-varying luminosity value series, said time-varying color value series, and at least one of said at least one identified objects in said video work to form an adaptation function.

3. A method of automatically matching a song to a video work comprised of a plurality of video frames according to claim 1, wherein said adaptation function of step (h) comprises a plurality of time-varying indicia representative of an energy level of said video work.

4. A method of automatically adapting an audio work to a video work using said adaptation function according to claim 3, wherein step (f) comprises the steps of:
(f1) modifying one or more energy levels of said audio work to match said energy levels of said adaptation function, or
(f2) modifying one or more instrumentations of said audio work to match said energy levels of said adaptation function, or
(f3) modifying one or more chord progressions of said audio work to match said energy levels of said adaptation function, or
(f4) modifying one or more volume levels of said audio work to match said energy levels of said adaptation function, or
(f5) modifying one or more volume progressions of said audio work to match said energy levels of said adaptation function.

5. A method of automatically adapting an audio work to a video work using said adaptation function according to claim 3, wherein step (f) comprises the steps of:
(f1) modifying one or more energy levels of said audio work to match said energy levels of said adaptation function, or
(f2) modifying one or more instrumentations of said audio work to match said energy levels of said adaptation function, or
(f3) modifying one or more chord progressions of said audio work to match said energy levels of said adaptation function, or
(f4) modifying one or more volume progressions of said audio work to match said energy levels of said adaptation function.

6. A method of automatically adapting an audio work to a video work using said adaptation function according to claim 3, wherein step (f) comprises the steps of:
(f1) modifying one or more energy levels of said audio work to match said energy levels of said adaptation function, or
(f2) modifying one or more instrumentations of said audio work to match said energy levels of said adaptation function, or
(f3) modifying one or more chord progressions of said audio work to match said energy levels of said adaptation function.

7. A method of automatically adapting an audio work to a video work using said adaptation function according to claim 3, wherein step (f) comprises the steps of:
(f1) modifying one or more energy levels of said audio work to match said energy levels of said adaptation function, or
(f2) modifying one or more instrumentations of said audio work to match said energy levels of said adaptation function.
